(19) Europäisches Patentamt
European Patent Office
Office européen des brevets

(11) EP 2 738 186 A1

(12) EUROPEAN PATENT APPLICATION
published in accordance with Art. 153(4) EPC

(43) Date of publication:
**04.06.2014 Bulletin 2014/23**

(21) Application number: **12817853.0**

(22) Date of filing: **18.07.2012**

(51) Int Cl.:
***C08F 210/14*** *(2006.01)* ***C08F 4/6592*** *(2006.01)*
***C08F 8/04*** *(2006.01)* ***C10M 107/10*** *(2006.01)*
***C10N 20/02*** *(2006.01)* ***C10N 20/04*** *(2006.01)*
***C10N 30/02*** *(2006.01)* ***C10N 40/04*** *(2006.01)*
***C10N 40/08*** *(2006.01)* ***C10N 40/12*** *(2006.01)*
***C10N 40/20*** *(2006.01)* ***C10N 40/25*** *(2006.01)*
***C10N 40/30*** *(2006.01)* ***C10N 50/10*** *(2006.01)*

(86) International application number:
**PCT/JP2012/068244**

(87) International publication number:
**WO 2013/015176 (31.01.2013 Gazette 2013/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2011 JP 2011162532**

(71) Applicant: **Idemitsu Kosan Co., Ltd**
**Tokyo 100-8321 (JP)**

(72) Inventors:
- **SHIMIZU, Hitomi**
  **Ichihara-shi**
  **Chiba 299-0193 (JP)**
- **KATAYAMA, Kiyokazu**
  **Ichihara-shi**
  **Chiba 299-0193 (JP)**
- **NODA, Hideaki**
  **Ichihara-shi**
  **Chiba 299-0193 (JP)**
- **OKANO, Masaki**
  **Ichihara-shi**
  **Chiba 299-0193 (JP)**

(74) Representative: **Vossius & Partner**
**Siebertstrasse 4**
**81675 München (DE)**

# (54) 1-DECENE/1-DODECENE COPOLYMER AND LUBRICATING-OIL COMPOSITION CONTAINING SAME

(57) Provided are an α-olefin copolymer useful as a high-viscosity lubricant oil excellent in viscosity characteristics, low-temperature characteristics and oxidation stability, and a lubricant oil containing the copolymer. The α-olefin copolymer is a 1-decene/1-dodecene copolymer produced by the use of a doubly bridged metallocene catalyst.

EP 2 738 186 A1

## Description

[Technical Field]

The present invention relates to a 1-decene/1-dodecene copolymer and a lubricant oil composition containing it.

[Background Art]

As the characteristics heretofore required for the lubricant oil for automobiles and industrial machinery, the lubricant oil is desired to have a relatively high viscosity from the lubrication performance thereof. However, for environmental considerations that have become specifically discussed these days, further advanced fuel efficiency, energy saving and life prolongation are desired. As compared with poly-α-olefins and others heretofore employed in the art, a synthetic lubricant oil having more excellent viscosity characteristics (viscosity index), low-temperature characteristics (low-temperature flowability) and oxidation stability is desired.
For hydrocarbon-based synthetic lubricant oil, an α-olefin polymer obtained from a relatively short-chain α-olefin has a defect in that its viscosity index is low, while an α-olefin polymer obtained from a relatively long-chain α-olefin has a defect in that its pour point is high; and therefore it is suitable to use 1-decene as the starting material for producing a lubricant oil excellent in point of both the viscosity index and the pour point. However, 1-decene is merely one fraction of an α-olefin produced in an α-olefin producing apparatus, in which many other fractions are produced at the same time, and therefore the quantity of production of 1-decene is limited. Consequently, the demand for 1-decene is high and 1-decene is expensive, and for these reasons, the cost of α-olefin polymer products for lubricant oil is high.
Consequently, heretofore, various trials have been made for obtaining α-olefin copolymers useful for hydrocarbon-based synthetic lubricant oil. For example, there is mentioned a method of polymerizing 1-decene and 1-dodecene by using aluminium chloride or aluminium bromide as a catalyst (Patent Reference 1). However, the obtained α-olefin polymer was not satisfactory in point of the viscosity index, the pour point and the durability thereof. Some examples are known where ethylene or an α-olefin is copolymerized according to various methods and the obtained polymer is used as a hydrocarbon-based synthetic lubricant oil (for example, Patent Reference 2). An example of using a metallocene catalyst in producing an α-olefin polymer is known in Patent Reference 3, which, however, has some problems in that only a low-molecular-weight polymer could be obtained and the low-temperature characteristics of the obtained polymer are unsatisfactory. A high-viscosity synthetic lubricant oil comprising an α-olefin copolymer and having excellent viscosity characteristics and low-temperature characteristics is unknown.
On the other hand, as a method for preventing oxidation of poly-α-olefin, for example, Patent Reference 4 discloses a regular "comb-shaped structure"-having polymer produced through polymerization with a metallocene catalyst, in which the monomer repeats 1,2-insertion, saying that the double bond, if remaining in the polymer, would cause a loss of the lubricant oil characteristics through oxidation of the double bond. Patent Reference 1 suggests a correlation between tertiary carbon and oxidation stability, but does not disclose any experimental data to support it. In this, in addition, the 1,2-disubstituted structure of polymer is specifically noted, which, however, is for merely analyzing the regular structure through 1,2-insertion by monomer as in Patent Reference 4, only in a different aspect, or that is, the patent reference does not disclose any method for selective synthesis. Further, Patent Reference 5 has a description indicating that reducing the bromine number could better oxidation stability.
As described above, the relationship between polymer structure and oxidation stability is not known concretely.
[Patent Reference 1] W02007/011459
[Patent Reference 2] JP-A 2000-351813
[Patent Reference 3] JP-T 2005-501957
[Patent Reference 4] JP-A 6-316538
[Patent Reference 5] JP-T 2009-514991

[Summary of the Invention]

[Technical Problem]

The present invention has been made in consideration of the above-mentioned situation, and is intended to provide relatively inexpensively an α-olefin copolymer useful as a high-viscosity lubricant oil excellent in viscosity characteristics (viscosity index), low-temperature characteristics (low-temperature flowability) and oxidation stability, as well as a lubricant oil containing the copolymer.

[Solution to Problem]

The present inventors have assiduously studied and, as a result, have found that, when 1-decene and 1-dodecene are used as monomers and when a catalyst comprising a doubly bridged metallocene compound is used, then the above-mentioned problems can be solved. The present invention has been completed on the basis of these findings.

Specifically, the present invention provides the following:

1. A 1-decene/1-dodecene copolymer produced by the use of a doubly bridged metallocene catalyst,
2. The 1-decene/1-dodecene copolymer of the above 1, wherein the proportion of the molecules of which the structure of the polymerization terminal is a 2,1-insertion terminal is 30 mol% or greater,
3. The 1-decene/1-dodecene copolymer of the above 1 or 2, wherein the ratio by mol of the 1-decene unit to the 1-dodecene unit is from 20/80 to 85/15,
4. The 1-decene/1-dodecene copolymer of any of the above 1 to 3, satisfying the following (a) and (b):

   (a) the mesotriad fraction (mm), as measured through $^{13}$C-NMR, is from 25 to 50 mol%,
   (b) the 100°C dynamic viscosity is from 30 to 1000 $mm^2/s$,

5. The 1-decene/1-dodecene copolymer of any of the above 1 to 4, of which the number-average molecular weight (Mn), as measured through GPC, is from 1500 to 15000,
6. The 1-decene/1-dodecene copolymer of any of the above 1 to 5, of which the weight-average molecular weight (Mw) is from 2100 to 30000,
7. The 1-decene/1-dodecene copolymer of any of the above 1 to 6, of which the molecular weight distribution (Mw/Mn) is 3.0 or smaller,
8. The 1-decene/1-dodecene copolymer of any of the above 1 to 7, wherein the double bond amount after hydrogenation relative to the total monomer units, as measured through $^{1}$H-NMR, is 0.3 mol% or smaller, and
9. A lubricant oil composition containing the 1-decene/1-dodecene copolymer of any of the above 1 to 8, and/or a hydrogenated 1-decene/1-dodecene copolymer prepared through hydrogenation of the 1-decene/1-dodecene copolymer.

[Advantageous Effects of the Invention]

According to the present invention, an α-olefin polymer useful as a high-viscosity lubricant oil excellent in viscosity characteristics (viscosity index), low-temperature characteristics (low-temperature flowability) and oxidation stability, as well as a lubricant oil containing the polymer can be provided relatively inexpensively. Specifically, by using a doubly bridged metallocene catalyst so as to effectively use other fractions than 1-decene, a polymer for lubricant oil having excellent physical properties on the same level as that of 1-decene homopolymer can be provided.

[Brief Description of the Drawing]

Fig. 1 is a view showing the relationship between the viscosity index and the pour point of the copolymers obtained in Examples 1-1 to 1-7 and Comparative Examples 1-1 to 1-4.

[Mode for Carrying out the Invention]

The 1-decene/1-dodecene copolymer of the present invention is characterized in that it is produced by the use of a doubly bridged metallocene catalyst.

Since 1-decene and 1-dodecene are copolymerized by the use of a doubly bridged metallocene catalyst, an α-olefin copolymer excellent in viscosity index and low-temperature flowability can be obtained; and since a doubly bridged metallocene catalyst is used, the polymerization terminal can be readily a 2,1-insertion terminal and a polymer chain with few tertiary carbons can be formed, and therefore the copolymer is excellent in oxidation stability.

Regarding the structure of the polymerization terminal of the 1-decene/1-dodecene copolymer of the present invention, the proportion of chain transfer reaction in 2,1-insertion of monomer is preferably large. The proportion of the molecules with 2,1-insertion terminal is preferably 30 mol% or greater, more preferably 50 mol% or greater, even more preferably 60 mol% or greater. When the proportion is 30 mol% or greater, then methyl branching in the molecule after hydrogenation is small and the stability of the copolymer to oxidation and heat is thereby enhanced.

The 1-decene/1-dodecene copolymer of the present invention is obtained by using 1-decene and 1-dodecene as monomers. A copolymer obtained by using 1-hexene in place of 1-decene is poor in viscosity characteristics (or that

is, the viscosity index thereof is small); and a copolymer obtained by using an α-olefin having a larger carbon number than that of 1-dodecene, in place of 1-dodecene, is poor in flow characteristics.

Preferably, the ratio by mol of the 1-decene unit to the 1-dodecene unit is from 20/80 to 85/15, more preferably from 50/50 to 85/15, even more preferably from 60/40 to 85/15.

Preferably, the 1-decene/1-dodecene copolymer of the present invention satisfies the following (a) and (b):

(a) the mesotriad fraction (mm), as measured through $^{13}C$-NMR, is from 25 to 50 mol%,
(b) the 100°C dynamic viscosity is from 30 to 1000 $mm^2/s$.

(a) Preferably, the mesotriad fraction (mm), as measured through $^{13}C$-NMR, is from 25 to 50 mol%, more preferably from 30 to 40 mol%, even more preferably from 32 to 38 mol%. When the mesotriad fraction (mm) is more than 50 mol%, then the copolymer may be poor in low-temperature characteristics (or that is, the pour point thereof may be high); and when less than 25 mol%, the pour point may also be high.

The 100°C dynamic viscosity (b) measured according to JISK2283 is preferably from 30 to 1000 $mm^2/s$, more preferably from 30 to 500 $mm^2/s$, even more preferably from 40 to 200 $mm^2/s$. When the 100°C dynamic viscosity is less than 30 $mm^2/s$, then the durability of the copolymer, when used as a high-viscosity lubricant oil component, may be insufficient; and when the 100°C dynamic viscosity is more than 1000 $mm^2/s$, then the viscosity of the copolymer may be too high to improve fuel efficiency and would be therefore insufficient in point of energy-saving performance.

The number-average molecular weight (Mn), as measured through gel permeation chromatography (GPC), of the 1-decene/1-dodecene copolymer of the present invention is preferably from 1500 to 15000 from the viewpoint of equipment life prolongation and energy-saving performance in use in wind power generators or the like, but is more preferably from 1500 to 10000, even more preferably from 2000 to 6000.

For the same reason, the weight-average molecular weight (Mw), as measured through GPC, of the 1-decene/1-dodecene copolymer of the present invention is preferably from 2100 to 30000, more preferably from 2800 to 20000, even more preferably from 3500 to 10000.

Preferably, the molecular weight distribution (Mw/Mn) of the 1-decene/1-dodecene copolymer of the present invention is 3.0 or smaller, more preferably 2.0 or smaller, even more preferably from 1.3 to 2.0. When the molecular weight distribution (Mw/Mn) is 3.0 or smaller, then the high-molecular weight component may decrease and the shear stability could be thereby bettered, and in addition, the low-molecular weight component may decrease and the volatility could be thereby depressed.

In the 1-decene/1-dodecene copolymer of the present invention, the double bond amount after hydrogenation relative to the total monomer units, as measured through $^{1}H$-NMR, is preferably 0.3 mol% or smaller from the viewpoint of oxidation stability since the unsaturated site could be fully hydrogenated, but is more preferably 0.2 mol% or smaller, even more preferably 0.1 mol% or smaller. Also preferably, the bromine value, as measured according to JIS K 2605, is 0.4 g bromine/100 g or smaller.

The 1-decene/1-dodecene copolymer of the present invention is characterized in that its pour point is low and its viscosity index is high, as compared with conventional α-olefin polymer. For example, of the 1-decene/1-dodecene copolymer of which the dynamic viscosity at 100°C is about 40 $mm^2/s$, in general, the pour point is not higher than -37.5°C, and the viscosity index (VI) is 170 or greater. Of the 1-decene/1-dodecene copolymer of which the dynamic viscosity at 100°C is about 100 $mm^2/s$, in general, the pour point is not higher than -32.5°C, and the viscosity index (VI) is 190 or greater.

The 1-decene/1-dodecene copolymer of the present invention can be produced by using the following (A) a doubly bridged metallocene compound and (B) (b-1) an organoaluminiumoxy compound and/or (b-2) an ionic compound capable of being converted into a cation through reaction with the above-mentioned doubly bridged metallocene compound, as a catalyst.

As the above-mentioned doubly bridged metallocene compound (A), usable are those represented by the following general formulae (I) and (II):

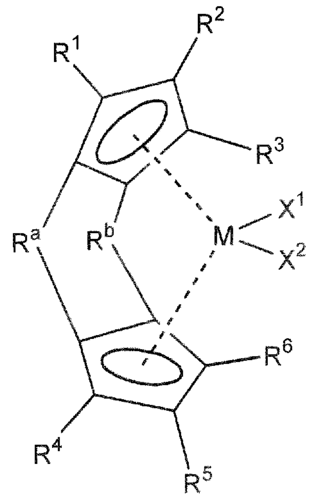

(I)

(In the formula, $R^1$ to $R^6$ each independently represent a hydrogen atom, a halogen atom, a hydrocarbon group having from 1 to 20 carbon atoms, preferably from 1 to 10 carbon atoms, more preferably from 1 to 4 carbon atoms (for example, an alkyl group), or an organic group having from 1 to 20 carbon atoms and containing at least one atom selected from a halogen atom, a silicon atom, an oxygen atom, a sulfur atom, a nitrogen atom and a phosphorus atom. At least one selected from $R^1$ to $R^3$ is a hydrogen atom, and at least one selected from $R^4$ to $R^6$ is a hydrogen atom. $R^a$ and $R^b$ each independently represent a linking group represented by the following general formula (a). $X^1$ and $X^2$ each independently represent a hydrogen atom, a halogen atom, a hydrocarbon group having from 1 to 20 carbon atoms, or an organic group having from 1 to 20 carbon atoms and containing at least one atom selected from a halogen atom, a silicon atom, an oxygen atom, a sulfur atom, a nitrogen atom and a phosphorus atom. M represents a transition metal of Groups 4 to 6 of the Periodic Table.)

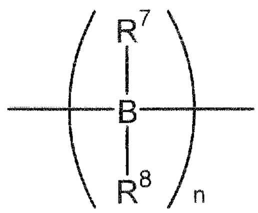

(a)

(In the formula, n indicates an integer of from 1 to 3. $R^7$ and $R^8$ each independently represent a hydrogen atom, a halogen atom, a hydrocarbon group having from 1 to 20 carbon atoms, or a halogen-containing hydrocarbon group having from 1 to 20 carbon atoms, preferably a hydrogen atom or a hydrocarbon group having from 1 to 4 carbon atoms, more preferably a hydrogen atom or an alkyl group having from 1 to 4 carbon atoms. B represents an atom of Group 14 of the Periodic Table.)

Preferred examples of $R^a$ and $R^b$ include $-CR^7R^8-$, $-SiR^7R^8-$, $-CR^7R^8-CR^7R^8-$ and $-SiR^7R^8-SiR^7R^8-$.

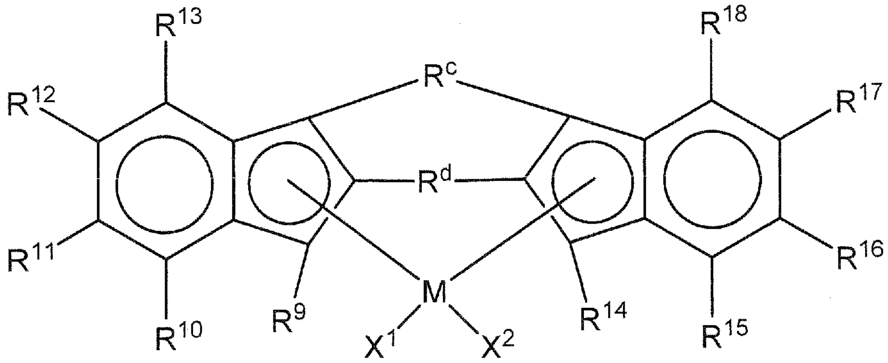

(II)

(In the formula, $R^9$ to $R^{18}$ and $X^1$ and $X^2$ each independently represent a hydrogen atom, a halogen atom, a

hydrocarbon group having from 1 to 20 carbon atoms, preferably a hydrocarbon group having from 1 to 10 carbon atoms, more preferably from 1 to 4 carbon atoms (for example, an alkyl group), a halogen-containing hydrocarbon group having from 1 to 20 carbon atoms, a silicon-containing group, an oxygen-containing group, a sulfur-containing group, a nitrogen-containing group or a phosphorus-containing group, and each may bond to the adjacent group to form a ring. $R^c$ and $R^d$ each independently represent a divalent group to bond the two ligands, each indicating a divalent hydrocarbon group having from 1 to 20 carbon atoms, preferably from 1 to 10 carbon atoms, more preferably from 1 to 4 carbon atoms, a divalent halogen-containing hydrocarbon group having from 1 to 20 carbon atoms, a divalent silicon-containing group, a divalent germanium-containing group, a divalent tin-containing group, -O-,-CO-, -S-, $-SO_2-$, $-NR^{19}-$, $-PR^{19}-$, $-P(O)R^{19}-$, $-BR^{19}-$ or $-AlR^{19}-$; $R^{19}$ represents a hydrogen atom, a halogen atom, a hydrocarbon group having from 1 to 20 carbon atoms, or a halogen-containing hydrocarbon group having from 1 to 20 carbon atoms. M represents a transition metal of Groups 4 to 6 of the Periodic Table.)

As specific examples of the doubly bridged metallocene compound represented by the above-mentioned general formula (I), there may be exemplified dichloride compounds including (1,1'-ethylene)(2,2'-ethylene)biscyclopentadienylzirconium dichloride, (1,1'-ethylene)(2,2'-ethylene)bis(3-methylcyclopentadienyl)zirconium dichloride, (1,1'-ethylene)(2,2'-ethylene)bis(4-methylcyclopentadienyl)zirconium dichloride, (1,1'-ethylene)(2,2'-ethylene)bis(3,4-dimethylcyclopentadienyl)zirconium dichloride, (1,1'-ethylene)(2,2'-ethylene)bis(3,5-dimethylcyclopentadienyl)zirconium dichloride, (1,1'-dimethylsilylene)(2,2'-dimethylsilylene)biscyclopentadienylzirconium dichloride, (1,1'-dimethylsilylene)(2,2'-dimethylsilylene)bis(3-methylcyclopentadienyl)zirconium dichloride, (1,1'-dimethylsilylene)(2,2'-dimethylsilylene)bis(4-methylcyclopentadienyl)zirconium dichloride, (1,1'-dimethylsilylene)(2,2'-dimethylsilylene)bis(3,4-dimethylcyclopentadienyl)zirconium dichloride, (1,1'-dimethylsilylene)(2,2'-dimethylsilylene)bis(3,5-dimethylcyclopentadienyl)zirconium dichloride, (1,1'-dimethylsilylene)(2,2'-ethylene)biscyclopentadienylzirconium dichloride, (1,1'-dimethylsilylene)(2,2'-ethylene)bis(3-methylcyclopentadienyl)zirconium dichloride, (1,1'-dimethylsilylene)(2,2'-ethylene)bis(4-methylcyclopentadienyl)zirconium dichloride, (1,1'-dimethylsilylene)(2,2'-ethylene)bis(3,4-dimethylcyclopentadienyl)zirconium dichloride, (1,1'-dimethylsilylene)(2,2'-ethylene)bis(3,5-dimethylcyclopentadienyl)zirconium dichloride, (1,1'-isopropylidene)(2,2'-dimethylsilylene)biscyclopentadienylzirconium dichloride, (1,1'-isopropylidene)(2,2'-dimethylsilylene)bis(3-methylcyclopentadienyl)zirconium dichloride, (1,1'-isopropylidene)(2,2'-dimethylsilylene)bis(4-methylcyclopentadienyl) zirconium dichloride, (1,1'-isopropylidene)(2,2'-dimethylsilylene)bis(3,4-dimethylcyclopentadienyl)zirconium dichloride, (1,1'-isopropylidene)(2,2'-dimethylsilylene)bis(3,5-dimethylcyclopentadienyl)zirconium dichloride, (1,1'-isopropylidene)(2,2'-isopropylidene)bis(3-methylcyclopentadienyl)zirconium dichloride, (1,1'-isopropylidene)(2,2'-isopropylidene)bis(4-methylcyclopentadienyl)zirconium dichloride, (1,1'-isopropylidene)(2,2'-isopropylidene)bis(3,4-dimethylcyclopentadienyl)zirconium dichloride, (1,1'-isopropylidene)(2,2'-isopropylidene)bis(3,5-dimethylcyclopentadienyl)zirconium dichloride, etc., as well as dimethyl derivatives, diethyl derivatives, dihydro derivatives, diphenyl derivatives, dibenzyl derivatives and the like of the above-mentioned compounds, and further their titanium or hafnium complexes.

As the compound represented by the above-mentioned general formula (II), for example, there may be exemplified dichloride compounds including (1,1'-ethylene) (2,2'-ethylene)bisindenylzirconium dichloride, (1,1'-ethylene)(2,2'-ethylene)bis(3-methylindenyl)zirconium dichloride, (1,1'-ethylene)(2,2'-ethylene)bis(4-methylindenyl)zirconium dichloride, (1,1'-ethylene)(2,2'-ethylene)bis(5-methylindenyl)zirconium dichloride, (1,1'-ethylene)(2,2'-ethylene)bis(5,6-benzindenyl)zirconium dichloride, (1,1'-ethylene)(2,2'-ethylene)bis(4,5-benzindenyl)zirconium dichloride, (1,1'-ethylene)(2,2'-ethylene)bis(5,6-dimethylindenyl)zirconium dichloride, (1,1'-dimethylsilylene)(2,2'-dimethylsilylene)bisindenylzirconium dichloride, (1,1'-dimethylsilylene)(2,2'-dimethylsilylene)bis(3-methylindenyl)zirconium dichloride, (1,1'-dimethylsilylene)(2,2'-dimethylsilylene)bis(4-methylindenyl)zirconium dichloride, (1,1'-dimethylsilylene)(2,2'-dimethylsilylene)bis(5-methylindenyl)zirconium dichloride, (1,1'-dimethylsilylene)(2,2'-dimethylsilylene)bis(5,6-benzindenyl)zirconium dichloride, (1,1'-dimethylsilylene)(2,2"-dimethylsilylene)bis(4,5-benzindenyl)zirconium dichloride, (1,1'-dimethylsilylene)(2,2'-dimethylsilylene)bis(5,6-dimethylindenyl)zirconium dichloride, (1,1'-dimethylsilylene)(2,2'-ethylene)bisindenylzirconium dichloride, (1,1'-dimethylsilylene)(2,2'-ethylene)bis(3-methylindenyl)zirocnium dichloride, (1,1'-dimethylsilylene)(2,2'-ethylene)bis(4-methylindenyl)zirocnium dichloride, (1,1'-dimethylsilylene)(2,2'-ethylene)bis(5-methylindenyl)zirocnium dichloride, (1,1'-dimethylsilylene)(2,2'-ethylene)bis(5,6-benzindenyl)zirocnium dichloride, (1,1'-dimethylsilylene)(2,2'-ethylene)bis(4,5-benzindenyl)zirocnium dichloride, (1,1'-dimethylsilylene)(2,2'-ethylene)bis(5,6-dimethylindenyl)zirocnium dichloride, (1,1'-ethylene)(2,2'-dimethylsilylene)bisindenylzirconium dichloride, (1,1'-ethylene)(2,2'-dimethylsilylene)bis(3-methylindenyl)zirconium dichloride, (1,1'-ethylene)(2,2'-dimethylsilylene)bis(4-methylindenyl)zirconium dichloride, (1,1'-ethylene)(2,2'-dimethylsilylene)bis(5-methylindenyl)zirconium dichloride, (1,1'-ethylene)(2,2'-dimethylsilylene)bis(5,6-benzindenyl)zirconium dichloride, (1,1'-ethylene)(2,2'-dimethylsilylene)bis(4,5-benzindenyl)zirconium dichloride, (1,1'-ethylene)(2,2'-dimethylsilylene)bis(5,6-dimethylindenyl)zirconium dichloride, (1,1'-dimethylsilylene)(2,2'-isopropylidene)bisindenylzirconium dichloride, (1,1'-dimethylsilylene)(2,2'-isopropylidene)bis(3-methylindenyl)zirconium dichloride, (1,1'-dimethylsilylene)(2,2'-isopropylidene)bis(4-methylindenyl)zirconium dichloride, (1,1'-dimethylsilylene)(2,2'-isopropylidene)bis(5-methylindenyl)zirconium dichloride, (1,1'-dimethylsilylene)(2,2'-isopropylidene)bis(5,6-benzindenyl)zirconium dichloride, (1,1'-dimethylsilylene)(2,2'-isopropylidene)bis(4,5-benzindenyl)zirconium dichloride, (1,1'-dimethylsilylene)(2,2'-isopropylidene)bis(5,6-dimethylindenyl)zirconium dichloride, etc., as well as dimethyl derivatives, diethyl derivatives, dihydro derivatives, diphenyl derivatives, dibenzyl derivatives and the like of the above-mentioned compounds, and further their titanium or hafnium complexes.

As the component (A), one alone or two or more different types of the doubly bridged metallocene compounds may be used here, either singly or as combined.

As the component (B) for the catalyst for use in the present invention, (b-1) an organoaluminiumoxy compound and/or (b-2) an ionic compound capable of being converted into a cation through reaction with the above-mentioned doubly bridged metallocene compound may be used.

As the organoaluminiumoxy compound (b-1), there may be mentioned linear aluminoxanes represented by the following general formula (III), and cyclic aluminoxanes represented by the following general formula (IV).

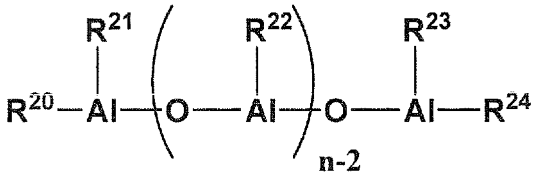

(III)

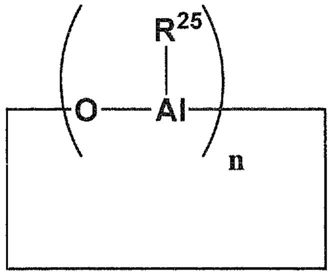

(IV)

(In the general formulae (III) and (IV), $R^{20}$ to $R^{25}$ each independently represent a hydrocarbon group having from 1 to 20 carbon atoms, preferably from 1 to 12 carbon atoms, or a halogen atom. The hydrocarbon group includes an alkyl group, an alkenyl group, an aryl group, an arylalkyl group, etc. n indicates a degree of polymerization and is generally an integer of from 2 to 50, preferably from 2 to 40. $R^{20}$ to $R^{25}$ may be the same or different from each other.)

Specific examples of the above-mentioned aluminoxanes include methylaluminoxane, ethylaluminoxane, isobutylaluminoxane, etc.

As the production method for the aluminoxanes, there may be mentioned a method of contacting an alkylaluminium with a condensing agent such as water or the like, for which, however, the means is not specifically defined, and the reaction may be attained according to known methods. For example, there may be mentioned a method of dissolving an organoaluminium compound in an organic solvent and contacting it with water; a method of initially adding an organoaluminium compound during polymerization and then adding water thereto later; a method of reacting crystal water contained in a metal salt or the like or adsorbed water to an inorganic substance or an organic substance with an organoaluminium compound; a method of reacting a tetraalkyldialuminoxane with a trialkylaluminium followed by further reacting it with water; etc. The aluminoxanes may be toluene-insoluble ones. One or more different types of such aluminoxanes may be used here either singly or as combined.

On the other hand, as the component (b-2), any ionic compound capable of being converted into a cation through reaction with the doubly bridged metallocene compound of the above-mentioned component (A) is usable here, but preferred is use of those represented by the following general formulae (V) and (VI).

$$([L^1\text{-}R^{26}]^{k+})_a([Z]^-)_b \qquad (V)$$

$$([L^2]^{k+})_a([Z]^-)_b \qquad (VI)$$

In the general formula (V), $L^1$ represents a Lewis base; $R^{26}$ represents a hydrogen atom, an alkyl group having from 1 to 20 carbon atoms, or a hydrocarbon group having from 6 to 20 carbon atoms and selected from an aryl group, an alkylaryl group and an arylalkyl group.

Specific examples of $L^1$ include amines such as ammonia, methylamine, aniline, dimethylamine, diethylamine, N-methylamine, diphenylamine, N,N-dimethylaniline, trimethylamine, triethylamine, tri-n-butylamine, methyldiphenylamine, pyridine, p-bromo-N,N-dimethylaniline, p-nitro-N,N-dimethylaniline, etc.; phosphines such as triethylphosphine, triphenylphosphine, diphenylphosphine, etc.; thioethers such as tetrahydrothiophene, etc.; esters such as ethyl benzoate, etc.; nitriles such as acetonitrile, benzonitrile, etc. Specific examples of $R^{26}$ include a hydrogen atom, a methyl group, an ethyl group, a benzyl group, a trityl group, etc.

In the general formula (VI), $L^2$ represents $M^1$, $R^{27}R^{28}M^2$, $R^{29}C$ or $R^{30}M^2$. $R^{27}$ and $R^{28}$ each independently represent a cyclopentadienyl group, a substituted cyclopentadienyl group, an indenyl group or a fluorenyl group; $R^{29}$ represents an alkyl group having from 1 to 20 carbon atoms, or a hydrocarbon group having from 6 to 20 carbon atoms and selected from an aryl group, an alkylaryl group and an arylalkyl group. $R^{30}$ represents a macrocyclic ligand such as tetraphenylporphyrin, phthalocyanine, etc.

$M^1$ includes elements of Groups 1 to 3, 11 to 13 and 17 of the Periodic Table; and $M^2$ represents an element of Groups 7 to 12 of the Periodic Table.

Specific examples of $R^{27}$ and $R^{28}$ include a cyclopentadienyl group, a methylcyclopentadienyl group, an ethylcyclopentadienyl group, a pentamethylcyclopentadienyl group, etc. Specific examples of $R^{29}$ include a phenyl group, a p-tolyl group, a p-methoxyphenyl group, etc.; and specific examples of $R^{30}$ include tetraphenylporphyrin, phthalocyanine, etc. Specific examples of $M^1$ include Li, Na, K, Ag, Cu, Br, I, $I_3$, etc.; and specific examples of $M^2$ include Mn, Fe, Co, Ni, Zn, etc.

In the general formulae (V) and (VI), k is the ionic valence of [$L^1$-$R^{26}$] or [$L^2$], indicating an integer of from 1 to 3; a indicates an integer of 1 or more; and b = (k x a).

$[Z]^-$ represents a non-coordinating anion $[Z^1]^-$ or $[Z^2]^-$.

$[Z^1]^-$ means an anion with multiple groups bonding to an element, namely representing $[M^3G^1G^2\cdots G^f]^-$. $M^3$ represents an element of Groups 5 to 15 of the Periodic Table, preferably an element of Groups 13 to 15 of the Periodic Table. $G^1$ to $G^f$ each represent a hydrogen atom, a halogen atom, an alkyl group having from 1 to 20 carbon atoms, a dialkylamino group having from 2 to 40 carbon atoms, an alkoxy group having from 1 to 20 carbon atoms, an aryl group having from 6 to 20 carbon atoms, an aryloxy group having from 6 to 20 carbon atoms, an alkylaryl group having from 7 to 40 carbon atoms, an arylalkyl group having from 7 to 40 carbon atoms, a halogen-substituted hydrocarbon group having from 1 to 20 carbon atoms, an acyloxy group having from 1 to 20 carbon atoms, an organometalloid group, or a hetero atom-containing hydrocarbon group having from 2 to 20 carbon atoms. Two or more of $G^1$ to $G^f$ may form a ring. f indicates an integer of [(atomic valence of the center metal $M^3$) + 1].

$[Z^2]^-$ represents a conjugated base of a Bronsted acid alone of which the logarithmic number of the reciprocal of the acid dissociation constant (pKa) is -10 or smaller, or a combination of such a Bronsted acid and a Lewis acid, or represents a conjugated base of an acid generally defined as a superacid. This may be coordinated with a Lewis base.

In $[Z^1]^-$, or that is, in $[M^3G^1G^2...G^f]^-$, specific examples of $M^3$ include B, Al, Si, P, As, Sb, etc., preferably B and Al. As specific examples of $G^1$ and $G^2$ to $G^f$, the dialkylamino group includes a dimethylamino group, a diethylamino group, etc.; the alkoxy group or the aryloxy group includes a methoxy group, an ethoxy group, an n-propoxy group, a phenoxy group, etc.; the hydrocarbon group includes a methyl group, an ethyl group, an n-propyl group, an isopropyl group, an n-butyl group, an isobutyl group, an n-octyl group, an n-eicosyl group, a phenyl group, a p-tolyl group, a benzyl group, a 4-t-butylphenyl group, a 3,5-dimethylphenyl group, etc.; the halogen atom includes fluorine, chlorine, bromine, iodine; the hetero atom-containing hydrocarbon group includes a p-fluorophenyl group, a 3,5-difluorophenyl group, a pentachlorophenyl group, a 3,4,5-trifluorophenyl group, a pentafluorophenyl group, a 3,5-bis(trifluoromethyl)phenyl group, a bis(trimethylsilyl)methyl group, etc.; the organometalloid group includes a pentamethylantimony group, a trimethylsilyl group, a trimethylgermyl group, a diphenylarsine group, a dicyclohexylantimony group, a diphenylboron group, etc.

Specific examples of the non-coordinating anion, or that is, the conjugated base $[Z^2]^-$ of a Bronsted acid alone having a pKa of -10 or smaller or a combination of such a Bronsted acid and a Lewis acid include a trifluoromethanesulfonate anion $(CF_3SO_3)^-$, a bis(trifluoromethanesulfonyl)methyl anion, a bis(trifluoromethanesulfonyl)benzyl anion, a bis(trifluoromethanesulfonyl)amide, a perochlorate anion $(ClO_4)^-$, a trifluoroacetate anion $(CF_3COO)^-$, a hexafluoroantimony anion $(SbF_6)^-$, a fluorosulfonate anion $(FSO_3)^-$, a chlorosulfonate anion $(ClSO_3)^-$, a fluorosulfonate anion/5-fluoroantimony $(FSO_3/SbF_5)^-$, a fluorosulfonate anion/5-fluoroarsenic $(FSO_3/AsF_5)^-$, a trifluoromethanesulfonate/5-fluoroantimony $(CF_3SO_3/SbF_5)^-$, etc.

Specific examples of the compound of the component (b-2) include triethylammonium tetraphenylborate, tri-n-butylammonium tetraphenylborate, trimethylammonium tetraphenylborate, tetraethylammonium tetraphenylborate, methyl(tri-n-butyl)ammonium tetraphenylborate, benzyl(tri-n-butyl)ammonium tetraphenylborate, dimethyldiphenylammonium tetraphenylborate, triphenyl(methyl)ammonium tetraphenylborate, trimethylanilinium tetraphenylborate, methylpyridinium tetraphenylborate, benzylpyridinium tetraphenylborate, methyl(2-cyanopyridinium) tetraphenylborate, triethylammonium tetrakis(pentafluorophenyl)borate, tri-n-butylammonium tetrakis(pentafluorophenyl)borate,, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridunium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenylborate, silver tetraphenylborate, trityl tetraphenylborate, tetraphenylporphyrinmanganese tetraphenylborate, ferrocenium tetrakis(pentafluorophenyl)borate, (1,1'-dimethylferrocenium) tetrakis(pentafluorophenyl)borate, decamethylferrocenium tetrakis(pentafluorophenyl)borate, silver tetrakis(pentafluorophenyl)berate, trityl tetrakis(pentafluorophenyl)berate, lithium tetrakis(pentafluorophenyl)borate, sodium tetrakis(pentafluorophenyl)borate, tetraphenylporphyrinmanganese tetrakis(pentafluorophenyl)borate, silver tetrafluoroborate, silver hexafluoroborate, silver hexafluoroarsenate, silver perchlorate, silver trifluoroacetate, silver trifluoromethanesulfonate, etc.

One alone or two or more different types of the components (b-2) may be used here either singly or as combined. The proportion of the component (A) and the component (B) to be used in the present invention is described. In case where the component (b-1) is used as the component (B), the ratio by mol of the two components is preferably from 1/1 to 1/1,000,000, more preferably from 1/10 to 1/10,000; and in case where the component (b-2) is used, the ratio by mol is preferably from 10/1 to 1/100, more preferably from 2/1 to 1/10. As the component (B), one alone or two or more different types of (b-1) and (b-2) may be used either singly or as combined.

The catalyst for use in the present invention may be one containing the above-mentioned component (A) and component (B) as the main components thereof, or may contain the component (A), the component (B) and the organoaluminium compound (C) as the main components thereof. In this, for the organoaluminium compound as the component (C), usable is a compound represented by the following general formula (VII):

$$(R^{31})_vAlQ_{3-v} \qquad \text{(VII)}$$

(In the formula, $R^{20}$ represents an alkyl group having from 1 to 10 carbon atoms; Q represents a hydrogen atom, an alkoxy group having from 1 to 20 carbon atoms, an aryl group having from 6 to 20 carbon atoms, or a halogen atom; v indicates an integer of from 1 to 3.)

Specific examples of the compound represented by the above-mentioned general formula (VII) include trimethylaluminium, triethylaluminium, triisopropylaluminium, triisobutylaluminium, dimethylaluminium chloride, diethylaluminium chloride, methylaluminium dichloride, ethylaluminium dichloride, dimethylaluminium fluoride, diisobutylaluminium hydride, diethylaluminium hydride, ethylaluminium sesqui-chloride, etc. One alone or two or more different types of these organoaluminium compounds may be used here either singly or as combined. The proportion of the above-mentioned component (A) and component (C) to be used here is, in terms of the ratio by mol of the two, preferably from 1/1 to 1/10,000, more preferably from 1/5 to 1/2,000, even more preferably from 1/10 to 1/1,000. Using the component (C) enhances the activity per the transition metal; however, if used too much, the organoaluminium compound would go to waste and may remain much in the $\alpha$-olefin polymer, and using too much the component is unfavorable.

For use in the present invention, at least one catalyst component may be held by a suitable carrier. The type of the carrier is not specifically defined. Usable here is an inorganic oxide carrier and any other inorganic carrier and organic carrier, but especially from the viewpoint of morphology control, preferred is use of an inorganic oxide carrier or any other inorganic carrier.

The inorganic oxide carrier concretely includes $SiO_2$, $Al_2O_3$, MgO, $ZrO_2$, $TiO_2$, $Fe_2O_3$, $B_2O_3$, CaO, ZnO, BaO, $ThO_2$ and their mixtures, for example, silica-alumina, zeolite, ferrite, glass fiber, etc. Of those, especially preferred are $SiO_2$ and $Al_2O_3$. The inorganic oxide carrier may contain a small amount of a carbonate, a nitrate, a sulfate or the like. On the other hand, the other carrier than the above includes magnesium compounds to be represented by a general formula $Mg(R^{32})_aX_b$, such as typically magnesium compounds of $MgCl_2$, $Mg(OC_2H_5)_2$ and others, as well as their complexes. $R^{32}$ represents an alkyl group having from 1 to 20 carbon atoms, an alkoxy group having from 1 to 20 carbon atoms, or an aryl group having from 6 to 20 carbon atoms; X represents a halogen atom or an alkyl group having from 1 to 20 carbon atoms; a indicates from 0 to 2; b indicates from 0 to 2; and a + b = 2. $R^{32}$'s and X's each may be the same or different.

The organic carrier includes polymers such as polystyrene, styrene-divinylbenzene copolymer, polyethylene, polypropylene, substituted polystyrene, polyarylate, etc., as well as starch, carbon, etc. As the carrier for use in the present invention, preferred are $MgCl_2$, $MgCl(OC_2H_5)$, $Mg(OC_2H_5)_2$, $SiO_2$, $Al_2O_3$, etc. The property of the carrier may differ depending on the type and the production method, but in general, the mean particle size of the carrier is generally from 1 to 300 $\mu$m, preferably from 10 to 200 $\mu$m, more preferably from 20 to 100 $\mu$m. When the particle size is small, then the fine powder in the 1-decene/1-dodecene copolymer may increase; but when the particle size is large, then the coarse particles in the 1-decene/1-dodecene copolymer may increase, therefore causing bulk density reduction and hopper clogging. The specific surface area of the carrier is generally from 1 to 1,000 $m^2/g$, preferably from 50 to 500 $m^2/g$; and the pore volume thereof is generally from 0.1 to 5 $cm^3/g$, preferably from 0.3 to 3 $cm^3/g$. When any of the

specific surface area and the pore volume oversteps the above range, then the catalyst activity may lower. The specific surface area and the pore volume can be determined, for example, from the volume of the adsorbed nitrogen gas according to a BET method (see "J. Am. Chem. Soc., 60, 309 (1983)"). Further, it is desirable that the carrier is used after fired generally at from 150 to 1,000°C, but preferably at from 200 to 800°C.

In case where at least one catalyst component is held by the above-mentioned carrier, at least one of the component (A) and the component (B) but preferably both the component (A) and the component (B) are held. The method for making at least one of the component (A) and the component (B) held by the carrier is not specifically defined. For example, there may be employed a method of mixing at least one of the component (A) and the component (B) with the carrier; a method of first processing the carrier with an organoaluminium compound or a halogen-containing silicon compound and then mixing it with at least one of the component (A) and the component (B) in an inert solvent; a method of reacting the carrier with the component (A) and/or the component (B) and an organoaluminium compound or a halogen-containing silicon compound; a method of making the component (A) or the component (B) held by the carrier and then mixing it with the component (B) or the component (A); a method of mixing a contact reaction product of the component (A) and the component (B) with the carrier; a method of making the carrier co-existing in the system of contact reaction of the component (A) and the component (B); etc. In the above reaction, an organoaluminium compound of the component (C) may also be added to the system.

The catalyst thus obtained in the manner as above may be used for polymerization after once processed for solvent removal through distillation and taken out as a solid, or may be directly used for polymerization. In the present invention, the operation of processing at least one of the component (A) and the component (B) to be held by the carrier may be attained in the polymerization system to prepare the catalyst. For example, there may be employed a method where at least one of the component (A) and the component (B), and the carrier and optionally an organoaluminium compound of the component (C) are put into a reactor, then an olefin such as ethylene or the like is added thereto under normal pressure to 2 MPa, and pre-polymerized at from -20 to 200°C for from 1 minute to 2 hours or so thereby forming catalyst particles.

In the present invention, the ratio by mass of the component (b-1) to the carrier to be used is preferably from 1/0.5 to 1/1,000, more preferably from 1/1 to 1/50; and the ratio by mass of the component (b-2) to the carrier to be used is preferably from 1/5 to 1/10,000, more preferably from 1/10 to 1/500. In case where two or more different components are used as the catalyst component (B), preferably, the ratio by mass of each component (B) to the carrier to be used falls within the above range. The ratio by mass of the component (A) to the carrier to be used is preferably from 1/5 to 1/10,000, more preferably from 1/10 to 1/500. The catalyst for use in the present invention may contain the above-mentioned component (A) and component (B) and the above-mentioned component (C) as the main components thereof. Preferably, the ratio by mass of the component (B) to the carrier to be used, and the ratio by mass of the component (A) to the carrier to be used each fall within the above-mentioned range. In this case, the amount of the component (C) is preferably in a ratio by mol to the component (A), as described above, of from 1/1 to 1/10,000, more preferably from 1/5 to 1/2,000, even more preferably from 1/10 to 1/1,000. When the ratio of the component (B) (the component (b-1) or the component (b-2)) to the carrier to be used, or the ratio of the component (A) to the carrier to be used, as well as the ratio by mass of the component (C) to the component (A) to be used each fall outside the above-mentioned range, then the activity may lower. The mean particle size of the catalyst for the present invention, thus prepared in the manner as above, is generally from 2 to 200 $\mu$m, preferably from 10 to 150 $\mu$m, more preferably from 20 to 100 $\mu$m; and the specific surface area thereof is generally from 20 to 1,000 $m^2$/g, preferably from 50 to 500 $m^2$/g. When the mean particle size is less than 2 $\mu$m, then the fine powder in the polymer may increase; but when more than 200 $\mu$m, then the coarse particles in the polymer may increase. When the specific surface area is less than 20 $m^2$/g, then the activity may lower; but when more than 1,000 $m^2$/g, then the bulk density of the polymer may lower. In the catalyst for the present invention, the transition metal amount in 100 g of the carrier is generally from 0.05 to 10 g, preferably from 0.1 to 2 g. When the transition metal amount is outside the above range, then the activity may lower. Thus held by a carrier, the catalyst can provide an industrially advantageous production method.

In the present invention, the polymerization mode is not specifically defined, and herein employable is any of a bulk polymerization method, a solution polymerization method, a suspension polymerization method, a slurry polymerization method, a vapor-phase polymerization method, etc. Regarding the polymerization condition, the polymerization temperature is generally from 0 to 200°C, preferably from 30 to 150°C, more preferably from 40 to 120°C. Regarding the ratio of the starting monomer to the catalyst to be used, the ratio (by mol) of starting monomer/component (A) is preferably from 1 to $10^8$, more preferably from 100 to $10^5$. Further, the polymerization time is generally from 5 minutes to 20 hours, and the reaction pressure is preferably from normal pressure to 0.2 MPaG, more preferably from normal pressure to 0.1 MPaG.

Preferably, the production method in the present invention is carried out in the absence of a solvent from the viewpoint of producibility, in which, however, a solvent may be used. In the latter case, for example, usable are aromatic hydrocarbons such as benzene, toluene, xylene, ethylbenzene, etc.; alicyclic hydrocarbons such as cyclopentane, cyclohexane, methylcyclohexane, etc.; aliphatic hydrocarbons such as pentane, hexane, heptane, octane, etc.; halogenohydrocarbons such as chloroform, dichloromethane, etc. One alone or two or more different types of these solvents may be used here either singly or as combined. The monomer such as 1-butene may serve as the solvent.

In the production method for the 1-decene/1-dodecene copolymer of the present invention, adding hydrogen in polymerization of an α-olefin could enhance the activity. In case where hydrogen is used, in general, the pressure thereof is 2 MPaG or smaller, preferably from 0.001 to 1 MPaG, more preferably from 0.01 to 0.2 MPaG.

In the present invention, the polymerization catalyst may be used for prepolymerization. The prepolymerization may be attained, for example, by contacting the catalyst component with a small amount of an olefin, but the method is not specifically defined, and any known method is employable. The olefin to be used for the prepolymerization is not specifically defined, and for example, there may be mentioned ethylene, α-olefins having from 3 to 20 carbon atoms, or their mixtures, etc. It is advantageous to use the same olefin as the monomer for the polymerization. The prepolymerization temperature is generally from -20 to 200°C, preferably from -10 to 130°C, more preferably from 0 to 80°C. In the prepolymerization, inert hydrocarbons, aliphatic hydrocarbons, aromatic hydrocarbons, monomers and others can be used as the solvent. Of those, especially preferred are aliphatic hydrocarbons and aromatic hydrocarbons. The prepolymerization may be attained in the absence of a solvent. Preferably, the prepolymerization condition is so controlled that the amount of the prepolymerization product per 1 mmol of the transition metal component in the catalyst could be from 1 to 10,000 g, more preferably from 1 to 1,000 g.

For controlling the molecular weight of the polymer in the production method of the present invention, there may be employed a method of selecting the type and the amount of each catalyst component to be used and the polymerization temperature; a method of adding hydrogen; or a method of adding an inert gas such as nitrogen or the like.

In case where the α-olefin polymer is used as a lubricant oil, preferably, the monomers (1-decene, 1-dodecene and their oligomers) are removed after the above-mentioned polymerization process. For the removal, for example, there may be mentioned a method of distillation under reduced pressure.

Also preferably, the 1-decene/1-dodecene copolymer is hydrogenated to produce a hydrogenated 1-decene/1-dodecene copolymer from the viewpoint of enhancing the stability of the copolymer. The hydrogenation method is not specifically defined, for which any known method is employable.

According to the production method of the present invention, a 1-decene/1-dodecene copolymer, which is useful as a high-viscosity lubricant oil excellent in viscosity characteristics and low-temperature characteristics, can be produced industrially with ease. Further, by controlling the reaction condition, for example, by controlling the reaction temperature, the properties of the product can be changed broadly.

The above-mentioned "produce industrially with ease" means, for example, that the amount of hydrogen to be used and the pressure level may be small, the reaction temperature is relatively mild and is easy to control, and the process does not require a step of dilution with an inert solvent.

[Lubricant Oil Composition]

The lubricant oil composition of the present invention contains the above-mentioned 1-decene/1-dodecene copolymer and/or the above-mentioned hydrogenated 1-decene/1-dodecene copolymer, and contains the polymer generally in an amount of from 0.01 to 100% by mass based on the total amount of the composition.

In the lubricant oil composition of the present invention, the type in use of the 1-decene/1-dodecene copolymer and the hydrogenated 1-decene/1-dodecene copolymer is not specifically defined. In the composition, the copolymer may be used as a base oil or may also be used as an additive. When used as a base oil, the copolymer may be widely used, covering from a low-molecular weight one to a high-molecular weight one. When used as a base oil, the copolymer may be used alone, or may be used as combined with any other base oil. The blend ratio is not specifically defined. In general, the copolymer accounts for from 1 to 100% by mass based on the entire amount of the composition. When used as an additive, for example, the copolymer may be used as a viscosity index improver. In this case, preferred is use of the 1-decene/1-dodecene copolymer having a relatively high molecular weight. For example, as the 1-decene/1-dodecene copolymer having a high-molecular weight, there may be mentioned those having a number-average molecular weight of more than 5000. The amount of the copolymer to be added may be generally from 0.01 to 33% by mass based on the total amount of the composition.

Various known additives may be suitably added to the lubricant oil composition of the present invention within a range not detracting from the object of the present invention. For example, there may be mentioned phosphorus-containing extreme pressure agents such as phosphates, phosphates, etc.; oily agents such as oleic acid, stearic acid, dimer acid and the like carboxylic acids and their esters, etc.; antiwear additives such as zinc dithiophosphate (ZnDTP, excepting aryl-type), zinc dithiocarbamate (ZnDTC), oxymolybdenum sulfide dithiocarbamate (MoDTC), nickel dithiophosphate (NiDTP), nickel dithiocarbamate (NiDTC), etc.; amine-type or phenol-type antioxidants; metal inactivators such as thiadiazole, benzotriazole, etc.; sludge dispersants such as alkenylsuccinic acids or their esters or imides, etc.; corrosion inhibitors such as sorbitan esters, neutral alkaline earth metal sulfonates, phenates, salicylates, etc.; defoaming agents such as dimethylpolysiloxane, polyacrylate, etc.

Use of the lubricant oil composition of the present invention is not specifically defined. The composition can be used for internal combustion oils such as gasoline engine oil (2-cycle, 4-cycle), diesel engine oil, etc.; drive system oils such as gear oil, ATF (automatic transmission fluid), PSF (power steering fluid), buffer oil, etc.; facility oils such as chassis oil, turbine oil, operating oil, working machine oil, refrigeration oil, etc.; working oils such as rolling oil, cutting oil, heat treatment oil, etc.; greases, etc.

[Examples]

Next, the present invention is described in more detail with reference to Examples; however, the present invention is not whatsoever limited by these Examples.
The physical properties of $\alpha$-olefin polymers were evaluated according to the following methods.

(1) Pour Point:

Measured according to JIS K 2269.

(2) Dynamic Viscosity and Viscosity Index:

The dynamic viscosity was measured according to JIS K 2283. The viscosity index was calculated from the dynamic viscosity according to JIS K 2283.

(3) Number-Average Molecular Weight and Molecular Weight Distribution (Mw/Mn):

Using an apparatus of JASCO's GPC-900 (columns: TOSOH TSK-GEL MULTIPORE HXL-M (2 columns) + Shodex KF801 (one column)) with a solvent of tetrahydrofuran and at a temperature of 40°C, these were determined in terms of polystyrene-equivalent data.

(4) Mesotriad Fraction (mm):

According to the method described in "Macromolecules 24, 2334 (1991); Polymer, 30, 1350 (1989)", this was determined through $^{13}$C-NMR.

(5) Double Bond Amount, Terminal Structure:

Using an NMR apparatus of JEOL's BURUKER 500 MHz, the sample was dissolved in a solvent of heavy chloroform and analyzed through $^{1}$H-NMR.
In $^{1}$H-NMR, when the intensity calculated by subtracting the peaks caused by the methyl branch from the peaks caused by the methyl group is represented by A. The value calculated by dividing A by the hydrogen atom number 3, A/3 indicates the total amount of the monomer units in the copolymer. The double bond is in four structures of vinyl, vinylidene, disubstituted internal olefin and trisubstituted internal olefin. Vinyl is detected at around 4.95 ppm and around 5.8 ppm; vinylidene is at around 4.7 ppm; disubstituted one is at around 5.4 ppm; and trisubstituted one is at around 5.15 ppm. The intensity of each peak at around 4.95 ppm, at around 5.8 ppm, at around 4.7 ppm, at around 5.4 ppm and at around 5.15 ppm is represented by B, C, D, E and F, respectively. The value to be calculated by dividing the peak intensity by the number of the hydrogen atoms bonding to the double bond carbon, (B+C)/3, D/2, E/2 and F each indicate the amount of each double bond. The amount of double bonds G (mol%) remaining in the copolymer is calculated by dividing the total amount of all double bonds by the total amount of the monomer units, as follows:

$$G = ((B+C)/3 + D/2 + E/2 + F)/(A/3) \times 100$$

The proportion H (%) of the 2,1-insertion terminal structure can be calculated from the double bond amount in the disubstituted internal olefin and the trisubstituted internal olefin, as follows:

$$H = ((E/2 + F)/(A/3))/((B+C)/3 + D/2 + E/2 + F)/(A/3) \times 100$$

(6) Number of Double Bond Amount in One Molecule:

A mean degree of polymerization P is calculated from the number-average molecular weight Mn and the mean molecular weight I of the monomer units constituting the copolymer, as measured through GPC, as follows:

$$P = (Mn/I)$$

In this, the mean molecular weight of the monomer units I is obtained from the copolymerization composition. Concretely, the content of 1-decene is represented by X mol%, and I is calculated as follows:

$$I = 140 \times X/100 + 168 \times (1 - X/100)$$

The number N of the double bond amount contained in one molecule is calculated by multiplying the molar fraction of double bond, G/100 by the mean degree of polymerization P, as follows:

$$N = P \times G/100$$

(7) Oxidation Stability Test:

Carried out according to the rotating bomb oxidation test (RBOT test) of JIS K 2514.

Production Example 1 [Production of (1,1'-dimethylsilylene)(2,2'-dimethylsilylene)-bis(cyclopentadienyl)zirconium dichloride]

About 13.8 g (600 mmol) of metal Na and 400 ml of dry THF (tetrahydrofuran) were put into a nitrogen-purged 1000-ml three-neck flask, and stirred therein at 0°C. After 5 minutes, from 1 to 2 ml of cyclopentadiene was dropwise added thereto, and when the hydrogen generation was stopped, from 1 to 2 ml of cyclopentadiene was newly added thereto. This was repeated so that 50 ml (600 mmol) in total of cyclopentadiene was added. The reaction solution changed from colorless transparent to pale pink. After removal of THF through distillation under reduced pressure, the crystal was washed twice with hexane and dried into solid under reduced pressure to give cyclopentadienyl sodium as a pink powder.

457 ml of THF was added to 43.0 g (480 mmol) of cyclopentadienyl sodium and stirred at 0°C. This was cooled to -78°C, and 29.2 ml (480 mmol) of dichlorodimethylsilane was gradually and dropwise added thereto. The solution changed from pink to white. After this was stirred overnight at room temperature, THF was distilled out to give a yellow powder [compound (1)].

The compound (1) was extracted with 150 ml of hexane, and the supernatant was transferred into a nitrogen-purged, 1000-ml three-neck flask. After this was cooled to -78°C, 175.8 ml (480 mmol) of n-butyllithium (2.73 mol/l) was dropwise added thereto. The reaction solution changed from yellow to milky. After this was stirred, overnight at room temperature, the supernatant was removed through filtration. The obtained white solid was washed with 100 ml of hexane. This was dried under reduced pressure to give a dilithium salt [compound (2)] as a white powder.

50 ml of diethyl ether and 100 ml of hexane were added to 27.4 g (137 mmol) of the compound (2). After this was cooled to -78°C, 16.7 ml (137 mmol) of dichlorodimethylsilane was gradually and dropwise added thereto. This was stirred at room temperature for 5 hours, then the precipitate was removed through filtration, and the filtrate was concentrated. This was recrystallized from hexane to give 4.05 g (yield 12%) of a compound (3) as a needle-like transparent crystal.

4.05 g (16.6 mmol) of the compound (3) was dissolved in 60 ml of hexane in a nitrogen-purged, 200-ml Schlenk tube, and stirred therein. After this was cooled to -78°C, 12.1 ml (33.1 mmol) of n-butyllithium (2.73 mol/l) was dropwise added thereto, and stirred overnight at room temperature. The solvent of the milky solution was distilled out under reduced pressure, and the precipitate was washed with 20 ml of hexane. This was dried under reduced pressure to give a dilithium salt [compound (4)] as a white powder.

34 ml of toluene was added to the compound (4). To this suspension, dropwise added at -20°C was a toluene (51 ml) suspension of 3.9 g (16.6 mmol) of zirconium tetrachloride. After this was stirred overnight at room temperature, the solvent was distilled out under reduced pressure to give the intended product [compound (5)]. The compound (5) was extracted with 30 ml of dichloromethane, and the filtrate was concentrated. This was washed with 10 ml of hexane,

and dried under reduced pressure to give 500 mg (yield 7.4%) of (5). Its $^1$H-NMR gave the following data.
$^1$H-NMR (500 MHz, $CDCl_3$) δ: 0.49 [6H, s, $(CH_3)_2Si$], 0.87 [6H, s, $(CH_3)_2Si$], 6.40 (2H, t, -CH-), 6.89 (4H, d, -CH-)

Example 1-1:

A stainless autoclave having an inner capacity of 1 liter was fully dried and purged with nitrogen, and thereafter 80 ml of 1-dodecene and 320 ml of 1-decene, and next 0.2 mmol of triisobutylaluminium were put into it, and heated up to 105°C. One ml of a catalyst mixture prepared separately (this was prepared as follows: 0.1 mmol of triisobutylaluminium (2 mmol/ml toluene solution; 0.05 ml), 10 μmol of (1,1'-dimethylsilylene)(2,2'-dimethylsilylene)-bis(cyclopentadienyl)zirconium dichloride prepared in Production Example 1 (10 μmol/ml toluene solution; 1 ml) and 0.012 mmol (11.5 mg) of powdery N,N-dimethylanilinium tetrakis(pentafluorophenyl)borate were put into a 10-ml glass-made Schlenk bottle in a nitrogen atmosphere, and stirred for 1 minute or so, and then 0.5 ml of 1-decene was added thereto and further stirred at room temperature for 1 hour) was put into the autoclave, and 0.05 MPaG hydrogen was introduced thereinto to start polymerization. After 60 minutes at 105°C, 1 ml of the remaining catalyst mixture was added, then further after 60 minutes, 1 ml of the still remaining catalyst mixture was added, and further after 60 minutes, 1 ml of the still remaining catalyst mixture was added, and thereafter 10 ml of methanol was added to stop the polymerization. The content was taken out, put into 200 ml of an aqueous 1 mas% NaOH solution, and stirred. The solution was transferred into a separating funnel, the organic layer was taken out, the organic layer was washed with water, and the organic layer was filtered through Toyo Roshi's Filter Paper 2C to remove the solid. The resulting solution was processed with a rotary evaporator (in an oil bath at 100°C under reduced pressure of about $1.0 \times 10^{-4}$ MPa) to remove toluene, the starting material, methanol and others, thereby giving 269 g of a colorless transparent liquid. Further, using a thin-film distillatory apparatus (Shibata Scientific Technology's molecule distillatory apparatus MS-300 Special Model, high-vacuum degassing apparatus DS-212Z), this was distilled under reduced pressure of $5 \times 10^{-6}$ MPMa at 180°C to give 249 g of a polymer from which the components having 24 or smaller carbon atoms had been removed. The obtained polymer was analyzed according to the above-mentioned methods, and the results are shown in Table 1. Next, the polymer after distillation was put into a stainless autoclave having an inner capacity of 1 liter, and a stabilized nickel catalyst (Sakai Chemical Industry's SN750) was added thereto in a ratio by weight of 1% by mass, and reacted under 2 MPa hydrogen at 130°C for 6 hours. After the reaction, this was cooled to around 80°C, then the content was taken out, and the catalyst component was separated through filtration through a 1-μm filter at 70°C to give 249 g of a hydrogenated product. This was analyzed according to the above-mentioned methods, and the results are shown in Table 1.

Example 1-2:

In the same manner as in Example 1-1 except that the polymerization temperature was 90°C, a colorless transparent polymer from which the components having 24 or smaller carbon atoms had been removed, and then its hydrogenated product were obtained in an amount of 249 g each. These were analyzed according to the above-mentioned methods, and the results are shown in Table 1.

Example 1-3:

In the same manner as in Example 1-1 except that 1-dodecene was 140 ml and 1-decene was 260 ml, a colorless transparent polymer from which the components having 24 or smaller carbon atoms had been removed, and then its hydrogenated product were obtained in an amount of 246 g each. These were analyzed according to the above-mentioned methods, and the results are shown in Table 1.

Example 1-4:

In the same manner as in Example 1-1 except that 1-dodecene was 200 ml and 1-decene was 200 ml, a colorless transparent polymer from which the components having 24 or smaller carbon atoms had been removed, and then its hydrogenated product were obtained in an amount of 250 g each. These were analyzed according to the above-mentioned methods, and the results are shown in Table 1.

Example 1-5:

In the same manner as in Example 1-4 except that the polymerization temperature was 90°C, a colorless transparent polymer from which the components having 24 or smaller carbon atoms had been removed, and then its hydrogenated product were obtained in an amount of 248 g each. These were analyzed according to the above-mentioned methods, and the results are shown in Table 1.

Example 1-6:

In the same manner as in Example 1-1 except that 1-dodecene was 320 ml and 1-decene was 80 ml, a colorless transparent polymer from which the components having 24 or smaller carbon atoms had been removed, and then its hydrogenated product were obtained in an amount of 240 g each. These were analyzed according to the above-mentioned methods, and the results are shown in Table 1.

Example 1-7:

In the same manner as in Example 1-6 except that the polymerization temperature was 90°C, a colorless transparent polymer from which the components having 24 or smaller carbon atoms had been removed, and then its hydrogenated product were obtained in an amount of 241 g each. These were analyzed according to the above-mentioned methods, and the results are shown in Table 1.

Comparative Example 1-1:

In the same manner as in Example 1-1 except that 160 ml of 1-tetradecene and 240 ml of 1-hexene were used as the monomers, a colorless transparent polymer hydride, from which the components having 24 or smaller carbon atoms had been removed, was obtained in an amount of 236 g. This was analyzed according to the above-mentioned methods, and the results are shown in Table 2.

Comparative Example 1-2:

In the same manner as in Example 1-1 except that 267 ml of 1-dodecene and 133 ml of 1-hexene were used as the monomers, a colorless transparent polymer from which the components having 24 or smaller carbon atoms had been removed, and then its hydrogenated product were obtained in an amount of 215 g each. These were analyzed according to the above-mentioned methods, and the results are shown in Table 2.

Comparative Example 1-3:

In the same manner as in Example 1-1 except that 300 ml of 1-dodecene and 100 ml of 1-hexene were used as the monomers and the polymerization temperature was 80°C, a colorless transparent polymer from which the components having 24 or smaller carbon atoms had been removed, and then its hydrogenated product were obtained in an amount of 183 g each. These were analyzed according to the above-mentioned methods, and the results are shown in Table 2.

Comparative Example 1-4:

In the same manner as in Example 1-1 except that the catalyst was bis(tertiary-butylcyclopentadienyl)zirconium dichloride, a colorless transparent polymer from which the components having 24 or smaller carbon atoms had been removed, and then its hydrogenated product were obtained in an amount of 230 g each. These were analyzed according to the above-mentioned methods, and the results are shown in Table 2.

Table 1-1

| | Reaction Condition | | | | | | Copopolymer before Hydrogenation | | | | | | |
|---|---|---|---|---|---|---|---|---|---|---|---|---|---|
| | Monomer Ratio | | | | Hydrogen Pressure | Temperature | Mn | Mw | Mw/Mn | Mean Degree of Polymerization P | Double Bond Amount | Number of Double Bonds in One Molecule | Proportion of 2,1-Insertion Terminal |
| | 1-dodecene | | 1-decene | | | | | | | | | | |
| | vol% | mol% | vol% | mol% | MPa | °C | - | - | - | - | mol% | - | mol% |
| Example 1-1 | 20 | 18 | 80 | 82 | 0.05 | 105 | 2415 | 4023 | 1.67 | 17 | 7.5 | 1.25 | 71.3 |
| Example 1-2 | 20 | 18 | 80 | 82 | 0.05 | 90 | 4055 | 7200 | 1.78 | 28 | 4.4 | 1.23 | 71.8 |
| Example 1-3 | 35 | 31 | 65 | 69 | 0.05 | 105 | 2590 | 4325 | 1.67 | 17 | 7.4 | 1.29 | 71.5 |
| Example 1-4 | 50 | 46 | 50 | 54 | 0.05 | 105 | 26.5 | 4504 | 1.68 | 18 | 7.6 | 1.33 | 71.1 |
| Example 1-5 | 50 | 46 | 50 | 54 | 0.05 | 90 | 4155 | 7313 | 1.76 | 27 | 4.3 | 1.17 | 72.1 |
| Example 1-6 | 80 | 77 | 20 | 23 | 0.05 | 105 | 2869 | 4738 | 1.65 | 18 | 7.3 | 1.30 | 71.2 |
| Example 1-7 | 80 | 77 | 20 | 23 | 0.05 | 90 | 4403 | 7593 | 1.72 | 27 | 4.3 | 1.17 | 71.5 |

Table 1-2

| | Copolymer after Hydrogenation | | | | | | | | | |
|---|---|---|---|---|---|---|---|---|---|---|
| | Yield | Double Bond Amount | (mm) | Dynamic Viscosity ($mm^2/s$) | | Viscosity Index | Pour Point | Mn | Mw | Mw/Mn |
| | g | mol% | mol% | 40°C | 100°C | - | °C | - | - | - |
| Example 1-1 | 249 | 0.1> | 31.3 | 325 | 41 | 181 | -42.5 | 2473 | 4120 | 1.67 |
| Example 1-2 | 249 | 0.1> | 31.3 | 821 | 92 | 203 | -37.5 | 4092 | 7266 | 1.78 |
| Example 1-3 | 246 | 0.1> | 34.2 | 325 | 41 | 181 | -42.5 | 2640 | 4408 | 1.67 |
| Example 1-4 | 250 | 0.1> | 39.0 | 310 | 40 | 182 | -45 | 2745 | 4604 | 1. 68 |
| Example 1-5 | 248 | 0.1> | 30.3 | 814 | 92 | 204 | -37.5 | 4204 | 7399 | 1.76 |
| Example 1-6 | 240 | 0.1> | 32.6 | 330 | 42 | 183 | -35 | 2931 | 4841 | 1.65 |
| Example 1-7 | 241 | 0.1> | 32.4 | 821 | 92 | 203 | -32.5 | 4452 | 7677 | 1.72 |

Table 2-1

| | Reaction Condition | | | | | | | | Copolymer before Hydrogenation | | | | | | |
|---|---|---|---|---|---|---|---|---|---|---|---|---|---|---|---|
| | Monomer Ratio | | | | | | Hydrogen Pressure | Temperature | Mn | Mw | Mw/Mn | Mean Degree of Polymerization P | Double Bond Amount | Number of Double Bonds in One Molecule | Proportion of 2, 1-Insertion Terminal |
| | A | | B | | C | | | | | | | | | | |
| | vol% | mol% | vol% | mol% | vol% | mol% | MPa | °C | - | - | - | - | mol% | | mol% |
| Comparative Example 1-1 | 60 | 57 | 0 | 0 | 40 | 43 | 0.05 | 105 | 2581 | 4310 | 1.67 | 19.7 | 5.2 | 1.03 | 67 |
| Comparative Example 1-2 | 33 | 30 | 67 | 70 | 0 | 0 | 0.05 | 105 | 3240 | 5557 | 1.72 | 22.7 | 4.1 | 0.93 | 71 |
| Comparative Example 1-3 | 25 | 23 | 75 | 77 | 0 | 0 | 0.05 | 80 | 9400 | 16168 | 1.72 | 63.2 | 1.6 | 1.01 | 68 |
| Comparative example 1-4 | 18 | 22 | 46 | 47 | 36 | 32 | 0.05 | 105 | 492 | 534 | 1.09 | 3.45 | 39.6 | 1.37 | 22 |

Comparative Examples 1-1, 1-2, 1-3: A = 1-hexene, B = 1-dodecene, C = 1-tetradecene
Comparative Example 1-4: A = 1-octene, B= 1-decene, C = 1-tetradecene

Table 2-2

| | Copolymer after Hydrogenation | | | | | | | | | |
|---|---|---|---|---|---|---|---|---|---|---|
| | Yield | Double Bond Amount | (mm) | Dynamic Viscosity ($mm^2/s$) | | Viscosity Index | Pour Point | Mn | Mw | Mw/Mn |
| | (g) | (mol%) | (mol%) | 40°C | 100°C | - | (°C) | - | - | - |
| Comparative Example 1-1 | 236 | 0.1> | 35 | 454 | 46 | 148 | -39 | 2631 | 4393 | 1.67 |
| Comparative Example 1-2 | 215 | 0.1> | 36 | 661 | 54 | 132 | -40 | 3290 | 5642 | 1.72 |
| Comparative Example 1-3 | 183 | 0.1> | 35 | 3842 | 296 | 215 | -30 | 9450 | 16254 | 1.72 |
| Comparative Example 1-4 | 230 | 0.1> | - | 8.0 | 2.5 | 157 | -30 | 522 | 567 | 1.09 |

Fig. 1 shows the relationship between the viscosity index and the pour point of the copolymers obtained in Examples 1-1 to 1-7 and Comparative Examples 1-1 to 1-4. It is known that the 1-decene/1-dodecene copolymers of the present invention are excellent in the balance between viscosity characteristics and low-temperature characteristics as compared with the copolymers obtained by the use of other monomers.

Example 2-1:

One ml of water and 30 mg of copper powder serving as a catalyst were added to 5 g of a composition composed of 99% by mass of the hydrogenated product of Example 1-1, and 0.5% by mass of Irganox L-107 and 0.5% by mass of Irganox L-57 both serving as an antioxidant, and put into the space of a chamber. The oxidation stability of the sample was determined according to the rotating bomb oxidation test (RBOT test) of JIS K 2514. The results are shown in Table 3.

Comparative Example 2-1:

147 g of a hydrogenated product was prepared in the same manner as in Example 1-1 except that 300 ml of 1-octene and 100 ml of 1-dodecene were used as the monomers, that bis(indenyl)zirconium dichloride was used as the catalyst and that the reaction temperature was 50°C. Thus obtained, the hydrogenated product was tested according to the same oxidation stability test as in Example 2-1, and the results are shown in Table 3. The proportion of 2,1-insertion polymerization terminal was determined through gas chromatography (GC) (Column: Ultra-2, 25 m x 0.2 mm x 0.33 μm, maximum temperature: 325°C). This is because, owing to chain transfer to hydrogen and to chain transfer to aluminium, the terminal of the polymer was saturated and therefore it was difficult to determine the terminal structure of the polymer through NMR. The polymerization terminal does not change irrespective of the carbon composition, and therefore the polymer can be analyzed from the C32 terminal structure. The GC chart showed the 1,2-insertion terminal at around 20.0 minutes and the 2,1-insertion terminal at around 20.5 minutes. The intensity of each peak is represented by Q and R, and the proportion of the 2,1-insertion terminal S is calculated as S (%) = R/(Q+R) x 100.

Comparative Example 2-2:

A commercial poly-alpha-olefin, Durasyn® 174 by Ioness was tested for oxidation stability in the same manner as in Example 2-1, and the results are shown in Table 3.

Table 3

| | Polymer after Hydrogenation | | | | | | | | | | |
|---|---|---|---|---|---|---|---|---|---|---|---|
| | Dynamic Viscosity ($mm^2/s$) | | (mm) | Proportion of 2,1-Insertion Terminal | Double Bond Amount | Viscosity Index | Pour Point | Mn | Mw | Mw/Mn | Oxidation Stability |
| | 40°C | 100°C | (mol%) | (mol%) | (mol%) | - | (°C) | - | - | - | (min) |
| Example 2-1 | 325 | 41 | 31.3 | 71 | 0.1> | 181 | -42.5 | 2473 | 4120 | 1.67 | 2905 |
| Comparative Example 2-1 | 302 | 37 | 38 | 9 | 0.1> | 172 | -45 | 2111 | 3398 | 1.6 | 1727 |
| Comparative Example 2-2 | 400 | 40 | - | - | - | 150 | -40 | 3618 | 2079 | 1.7 | 1205 |

From Table 3, it is known that, in the copolymer of Example 2-1, as produced by the use of a doubly bridged metallocene catalyst, the proportion of the molecules with 2,1-insertion terminal is 30 mol% or greater and the oxidation stability of the copolymer is good; however, in the copolymer of Comparative Example 2-1, as produced by the use of a non-bridged metallocene catalyst, the proportion of the molecules with 2,1-insertion terminal is 9 mol% and is low, and the oxidation stability of the copolymer is poor. The oxidation stability of the commercial poly-alpha-olefin, Durasyn is far inferior to that of the copolymer of Comparative Example 2-1.

[Industrial Applicability]

According to the present invention, a 1-decene/1-dodecene copolymer useful as a high-viscosity lubricant oil excellent in viscosity characteristics (viscosity index), low-temperature characteristics (low-temperature flowability) and oxidation stability can be produced industrially with ease, and the present invention contributes toward advanced fuel efficiency, energy saving and life prolongation required for lubricant oil.

## Claims

1. A 1-decene/1-dodecene copolymer produced by the use of a doubly bridged metallocene catalyst.

2. The 1-decene/1-dodecene copolymer according to claim 1, wherein the proportion of the molecules of which the structure of the polymerization terminal is a 2,1-insertion terminal is 30 mol% or greater.

3. The 1-decene/1-dodecene copolymer according to claim 1 or 2, wherein the ratio by mol of the 1-decene unit to the 1-dodecene unit is from 20/80 to 85/15.

4. The 1-decene/1-dodecene copolymer according to any of claims 1 to 3, satisfying the following (a) and (b):

   (a) the mesotriad fraction (mm), as measured through $^{13}$C-NMR, is from 25 to 50 mol%,
   (b) the 100°C dynamic viscosity is from 30 to 1000 mm$^2$/s.

5. The 1-decene/1-dodecene copolymer according to any of claims 1 to 4, of which the number-average molecular weight (Mn), as measured through GPC, is from 1500 to 15000.

6. The 1-decene/1-dodecene copolymer according to any of claims 1 to 5, of which the weight-average molecular weight (Mw) is from 2100 to 30000.

7. The 1-decene/1-dodecene copolymer according to any of claims 1 to 6, of which the molecular weight distribution (Mw/Mn) is 3.0 or smaller.

8. The 1-decene/1-dodecene copolymer according to any of claims 1 to 7, wherein the double bond amount after hydrogenation relative to the total monomer units, as measured through $^1$H-NMR, is 0.3 mol% or smaller.

9. A lubricant oil composition containing the 1-decene/1-dodecene copolymer of any of claims 1 to 8 and/or a hydrogenated 1-decene/1-dodecene copolymer prepared through hydrogenation of the 1-decene/1-dodecene copolymer.

Fig. 1:

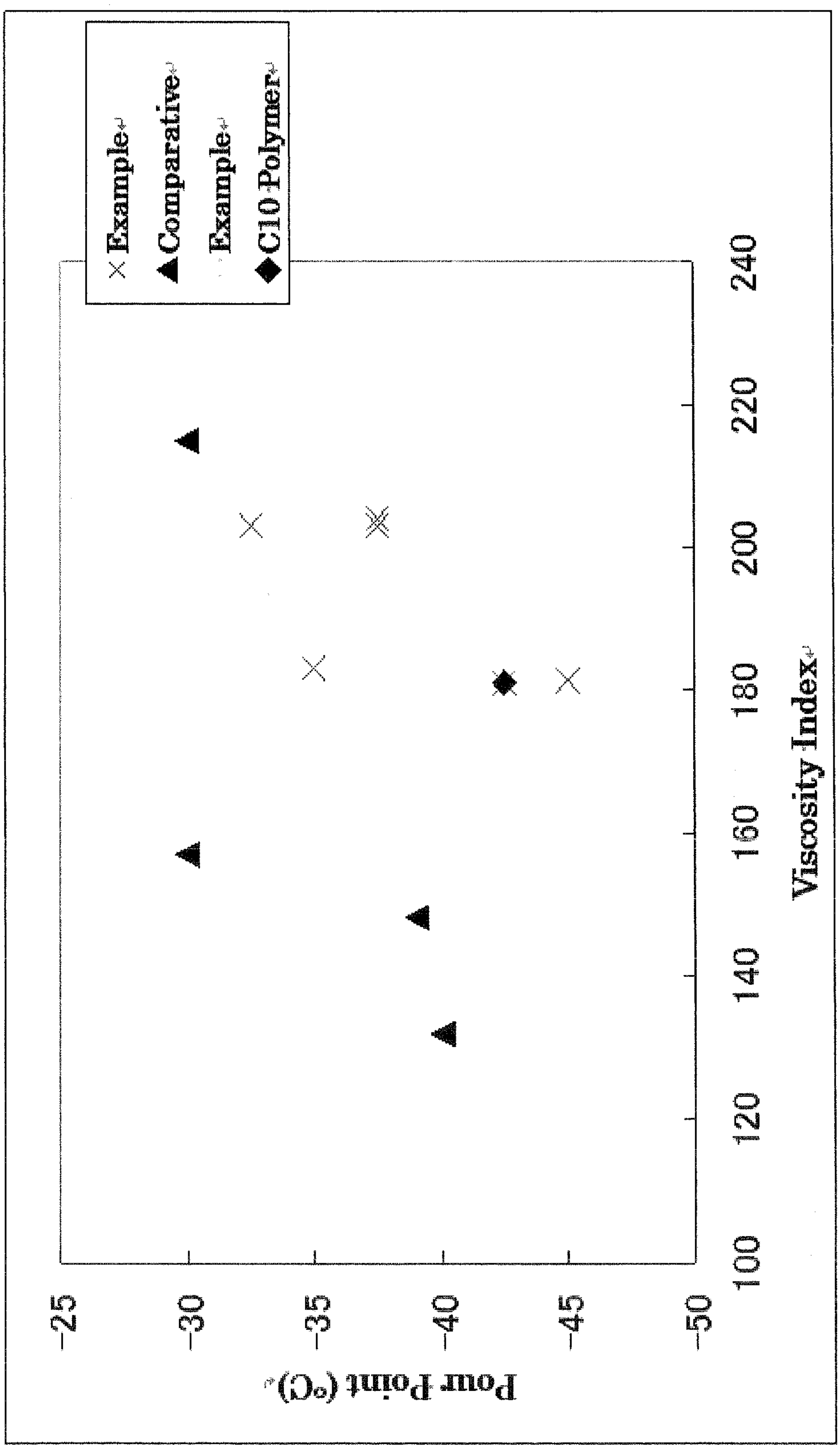
Example
Comparative Example
C10 Polymer
Pour Point (°C)
-25
-30
-35
-40
-45
-50
Viscosity Index
100
120
140
160
180
200
220
240

**INTERNATIONAL SEARCH REPORT**

International application No.
PCT/JP2012/068244

A. CLASSIFICATION OF SUBJECT MATTER
See extra sheet.

According to International Patent Classification (IPC) or to both national classification and IPC

B. FIELDS SEARCHED

Minimum documentation searched (classification system followed by classification symbols)
C08F210/14, C08F4/6592, C08F8/04, C10M107/10, C10N20/02, C10N20/04, C10N30/02, C10N40/04, C10N40/08, C10N40/12, C10N40/20, C10N40/25, C10N40/30, C10N50/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2008-528709 A (Exxonmobil Chemical Patents Inc.), 31 July 2008 (31.07.2008), claims; paragraphs [0002], [0003], [0018], [0027], [0029]; examples & US 2006/0161034 A1 & EP 1836145 A1 & WO 2006/078395 A1 | 1-9 |
| Y | WO 2010/084966 A1 (Idemitsu Kosan Co., Ltd.), 29 July 2010 (29.07.2010), claims; paragraphs [0010], [0014], [0054] to [0056], [0069] to [0072] & EP 2383328 A1 & CN 102292421 A | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 September, 2012 (24.09.12) | 09 October, 2012 (09.10.12) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2012/068244

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2010/074233 A1 (Idemitsu Kosan Co., Ltd.), 01 July 2010 (01.07.2010), claims; paragraphs [0005], [0046], [0054] to [0058], [0060] & EP 2380918 A1 | 1-9 |
| Y | JP 2001-335607 A (Idemitsu Kosan Co., Ltd.), 04 December 2001 (04.12.2001), claims; paragraphs [0002], [0004], [0006] to [0009], [0047], [0054], [0056], [0058]; examples & US 2002/0143113 A1 & US 2002/0010290 A1 & EP 1164146 A2 | 1-9 |
| A | JP 2009-503147 A (Exxonmobil Chemical Patents Inc.), 29 January 2009 (29.01.2009), entire text & US 2007/0043248 A1 & US 2008/0177121 A1 & US 2009/0005279 A1 & EP 2041194 A1 & WO 2007/011973 A1 & WO 2007/011459 A1 & WO 2008/010865 A2 | 1-9 |
| P,A | WO 2011/093295 A1 (Idemitsu Kosan Co., Ltd.), 04 August 2011 (04.08.2011), entire text (Family: none) | 1-9 |

Form PCT/ISA/210 (continuation of second sheet) (July 2009)

**INTERNATIONAL SEARCH REPORT**

International application No.
PCT/JP2012/068244

Continuation of A. CLASSIFICATION OF SUBJECT MATTER
(International Patent Classification (IPC))

*C08F210/14*(2006.01)i, *C08F4/6592*(2006.01)i, *C08F8/04*(2006.01)i, *C10M107/10*(2006.01)i, *C10N20/02*(2006.01)n, *C10N20/04*(2006.01)n, *C10N30/02*(2006.01)n, *C10N40/04*(2006.01)n, *C10N40/08*(2006.01)n, *C10N40/12*(2006.01)n, *C10N40/20*(2006.01)n, *C10N40/25*(2006.01)n, *C10N40/30*(2006.01)n, *C10N50/10*(2006.01)n

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007011459 A
- JP 2000351813 A
- JP 2005501957 T
- JP 6316538 A
- JP 2009514991 T


### Non-patent literature cited in the description


- *J. Am. Chem. Soc.,* 1983, vol. 60, 309
- *Macromolecules,* 1991, vol. 24, 2334
- *Polymer,* 1989, vol. 30, 1350